# EUROPEAN PATENT SPECIFICATION

(11) **EP 3 296 516 B1**
(45) Date of publication and mention of the grant of the patent: **12.04.2023**
(21) Application number: 17191392.4
(22) Date of filing: 15.09.2017
(51) Int. Cl.: F01D 9/04

(54) **SEGMENTED STATOR VANE**
SEGMENTIERTE STATORSCHAUFEL
AUBE DE STATOR SEGMENTÉE

(30) Priority: 16.09.2016 US 201615268280
(43) Date of publication of application: 21.03.2018
(73) Proprietor: Raytheon Technologies Corporation, Farmington, CT 06032 (US)
(72) Inventor: BAUMANN, Paul W., Amesbury, MA Massachusetts 01913 (US); AMADON, Colin G., Kennebunk, ME Maine 04043 (US); FORD, Steven J., Sanford, ME Maine 04073 (US)
(74) Representative: Dehns

(56) References cited:
- EP-A1- 0 654 586
- EP-A2- 1 707 744
- US-A- 3 545 882
- US-A- 4 218 178
- US-A- 4 693 667
- US-A- 5 634 768

## Description

### FIELD

The present disclosure relates to a gas turbine engine and, more specifically, to a stator vane assembly.

### BACKGROUND

Gas turbine engines typically include a fan section, a compressor section, a combustor section and a turbine section. In general, during operation, air is pressurized in the compressor section and is mixed with fuel and burned in the combustor section to generate hot combustion gases. The hot combustion gases flow through the turbine section, which extracts energy from the hot combustion gases to power the compressor section and other gas turbine engine loads. One or more sections of the gas turbine engine may include a plurality of vane assemblies having vanes interspersed between rotor assemblies that carry the blades of successive stages of the section. Typically, the vanes are constructed from titanium, stainless steel or high grade aluminum. The vanes are subjected to vibratory stresses by the supporting structure and may be tuned according to the vibratory stress. Additionally, weight and cost are important considerations in the manufacturing of aircraft engines.

A prior art vane assembly and method of manufacturing the same having the features of the preamble to claims 1 and 9 is disclosed in US 5,634,768. Another prior art vane assembly is disclosed in EP 0,654,586. A further example of prior art is given by the patent documentation US 4,218,178.

### SUMMARY

From one aspect, the present invention provides a vane assembly for a gas turbine engine in accordance with claim 1.

From another aspect, the present invention provides a gas turbine engine in accordance with claim 7.

From yet another aspect, the present invention provides a method of manufacturing a vane assembly in accordance with claim 9.

Features of embodiments are recited in the dependent claims.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates a cross-sectional view of an exemplary gas turbine engine, in accordance with various embodiments;
FIG. 2 illustrates a partial cross-sectional view of a compressor section of a gas turbine engine, in accordance with various embodiments;
FIG. 3 illustrates a fragmentary perspective view of a stator vane assembly of a gas turbine engine, in accordance with various embodiments; and
FIG. 4 illustrates a method of manufacturing a vane assembly, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that logical, chemical, and mechanical changes may be made without departing from the scope of the disclosure. Thus, the detailed description herein is presented for purposes of illustration only and not of limitation. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full, and/or any other possible attachment option. Additionally, any reference to without contact (or similar phrases) may also include reduced contact or minimal contact. Cross hatching lines may be used throughout the figures to denote different parts but not necessarily to denote the same or different materials.

As used herein, "aft" refers to the direction associated with the tail (e.g., the back end) of an aircraft, or generally, to the direction of exhaust of the gas turbine engine. As used herein, "forward" refers to the direction associated with the nose (e.g., the front end) of an aircraft, or generally, to the direction of flight or motion.

As used herein, "distal" refers to the direction radially outward, or generally, away from the axis of rotation of a turbine engine. As used herein, "proximal" refers to a direction radially inward, or generally, towards the axis of rotation of a turbine engine.

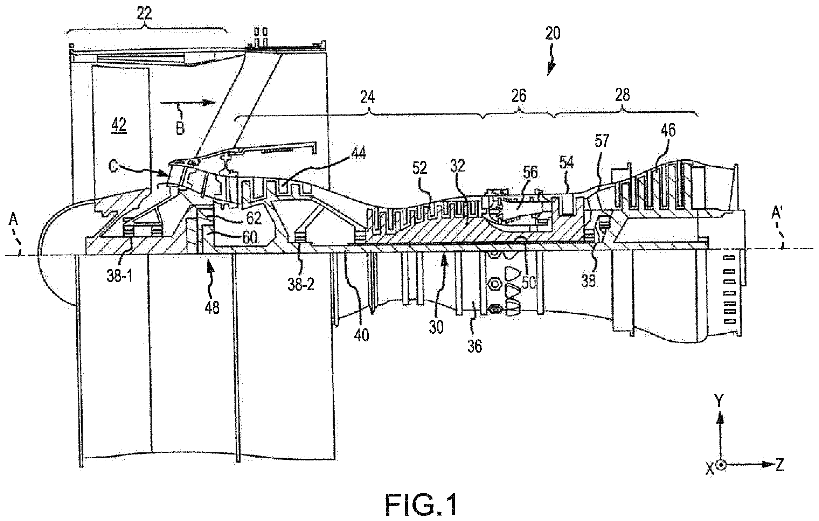

In various embodiments and with reference to FIG. 1, a gas-turbine engine 20 is provided. Gas-turbine engine 20 may be a two-spool turbofan that generally incorporates a fan section 22, a compressor section 24, a combustor section 26 and a turbine section 28. Alternative engines may include, for example, an augmentor section among other systems or features. In operation, fan section 22 can drive coolant along a bypass flow-path B while compressor section 24 can drive coolant along a path of core airflow C for compression and communication into combustor section 26 then expansion through turbine section 28. Although depicted as a turbofan gas-turbine engine 20 herein, it should be understood that the concepts described herein are not limited to use with turbofans as the teachings may be applied to other types of turbine engines including three-spool architectures.

Gas-turbine engine 20 may generally comprise a low speed spool 30 and a high speed spool 32 mounted for rotation about an engine central longitudinal axis A-A' relative to an engine static structure or engine case structure 36 via several bearing systems 38, 38-1, and 38-2. It should be understood that various bearing systems 38 at various locations may alternatively or additionally be provided, including for example, bearing system 38, bearing system 38-1, and bearing system 38-2.

Low speed spool 30 may generally comprise an inner shaft 40 that interconnects a fan 42, a low pressure compressor section 44 and a low pressure turbine section 46. Inner shaft 40 may be connected to fan 42 through a geared architecture 48 that can drive fan 42 at a lower speed than low speed spool 30. Geared architecture 48 may comprise a gear assembly 60 enclosed within a gear housing 62. Gear assembly 60 couples inner shaft 40 to a rotating fan structure. High speed spool 32 may comprise an outer shaft 50 that interconnects a high pressure compressor 52 and high pressure turbine 54. A combustor 56 may be located between high pressure compressor 52 and high pressure turbine 54. A mid-turbine frame 57 of engine case structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. As used herein, a "high pressure" compressor or turbine experiences a higher pressure than a corresponding "low pressure" compressor or turbine.

The core airflow C may be compressed by low pressure compressor 44 then high pressure compressor 52, mixed and burned with fuel in combustor 56, then expanded over high pressure turbine 54 and low pressure turbine 46. Turbines 46, 54 rotationally drive the respective low speed spool 30 and high speed spool 32 in response to the expansion.

Gas-turbine engine 20 may be, for example, a high-bypass ratio geared aircraft engine. In various embodiments, the bypass ratio of gas-turbine engine 20 may be greater than about six. In various embodiments, the bypass ratio of gas-turbine engine 20 may be greater than ten. In various embodiments, geared architecture 48 may be an epicyclic gear train, such as a star gear system (sun gear in meshing engagement with a plurality of star gears supported by a carrier and in meshing engagement with a ring gear) or other gear system. Geared architecture 48 may have a gear reduction ratio of greater than about 2.3 and low pressure turbine 46 may have a pressure ratio that is greater than about five. In various embodiments, the bypass ratio of gas-turbine engine 20 is greater than about ten. In various embodiments, the diameter of fan 42 may be significantly larger than that of the low pressure compressor 44, and the low pressure turbine 46 may have a pressure ratio that is greater than about five. Low pressure turbine 46 pressure ratio may be measured prior to inlet of low pressure turbine 46 as related to the pressure at the outlet of low pressure turbine 46 prior to an exhaust nozzle. It should be understood, however, that the above parameters are exemplary of various embodiments of a suitable geared architecture engine and that the present disclosure contemplates other turbine engines including direct drive turbofans. A gas turbine engine may comprise an industrial gas turbine (IGT) or a geared aircraft engine, such as a geared turbofan, or non-geared aircraft engine, such as a turbofan, a turboshaft, or may comprise any gas turbine engine as desired.

In various embodiments, fan 42, low pressure compressor 44, high pressure compressor 52, low pressure turbine 46, and high pressure turbine 54 may comprise one or more stages or sets of rotating blades and one or more stages or sets of stationary vanes axially interspersed with the associated blade stages but non-rotating about engine central longitudinal axis A-A'.

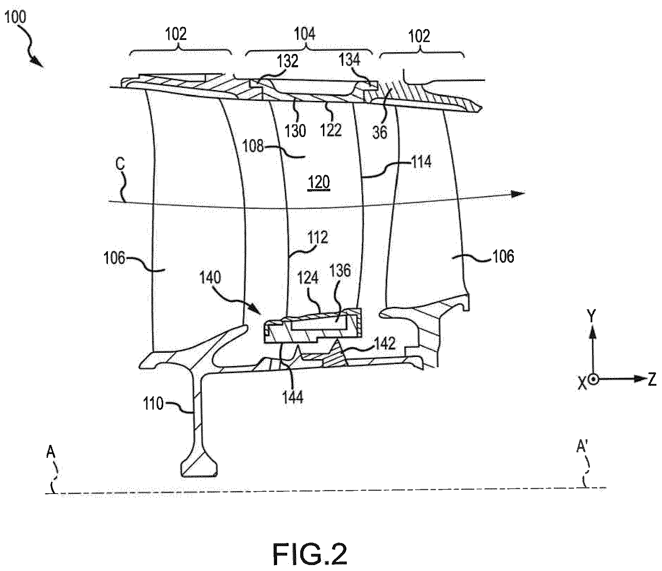

With reference now to FIG. 2 and still to FIG. 1, a portion of an engine section 100 is shown in accordance with various embodiments. Engine section 100 may be a fan section 22, a compressor section 24 or a turbine section 28. In various embodiments, engine section 100 may be a low pressure compressor 44 of gas turbine engine 20. Engine section 100 is illustrated in FIG. 2, for example, as a compressor section. It will be understood that the vane assemblies in this disclosure is not limited to the compressor section, and could extend to other sections of the gas turbine engine 20, including but not limited to the fan section 22.

Referring to FIG. 2, engine section 100 may include alternating rows of rotor assemblies 102 and vane assemblies 104 that carry airfoils that extend into the core flow path C. For example, the rotor assemblies 102 may carry a plurality of rotating blades 106, while each vane assembly may carry a plurality of vanes 108 that extend into the core flow path C. Vanes 108 may be arranged circumferentially about engine central longitudinal axis A. Blades 106 may rotate about engine central longitudinal axis A-A', while vanes 108 may remain stationary about engine central longitudinal axis A-A'. Further, in various embodiments, a set of blades 106 may be coupled about a circumference of a generally circular central disk 110, which may be disposed radially inward of core airflow C. Blades 106 create or extract energy (in the form of pressure) from the core airflow that is communicated through engine section 100 along the core flow path C. Vanes 108 direct the core airflow to blades 106 to either add or extract energy.

Vane 108 may comprise a leading edge 112 and a trailing edge 114. Leading edge 112 and trailing edge 114 may be configured to direct airflow through engine section 100. In various embodiments, vane assembly 104 may increase pressure in engine section 100, and straighten and direct air flow. Vane 108 may comprise, for example, an airfoil body 120. Vane 108 may comprise a radially outer end 122 and a radially inner end 124 with airfoil body 120 extending between radially outer end 122 and radially inner end 124. Radially outer end 122 may be a distal end of vane 108. Radially inner end 124 may be a proximal end of vane 108. Airfoil body 120 may extend radially from engine central longitudinal axis A-A' such that radially outer end 122 is at a further radial distance from engine central longitudinal axis A-A' than radially inner end 124. A distance between radially outer end 122 and radially inner end 124 may, for example, comprise a span of airfoil body 120.

In various embodiments, vanes 108 may be comprised of a composite material such as a fiber composite material and/or a fiber composite material infiltrated or impregnated with a resin, such as epoxy or other thermoset or a thermoplastic. The composite material of vanes 108 may comprise at least one of carbon fiber, glass fiber, aramid fiber, para-aramid fiber or a combination thereof impregnated with a resin. The composite material of vanes 108 may comprise a high temperature polymer such as an amorphous thermoplastic polyetherimide (PEI), such as ULTEM^{®}, which is a trademark of SABIC Innovative Plastics, Inc. For example, vanes 108 may be formed from a non-metallic carbon fiber reinforced epoxy resin. In various embodiments, vanes 108 may be made from moldable materials, such as carbon and/or glass reinforced thermoset or thermoplastic. The material may be compression molded using an autoclave or injection molded by injecting material into a mold. The materials may be low cost, low weight materials shaped using low cost techniques. Further, the composite material may have improved vibration characteristics, and may reduce the cost associated with tuning the blades. In that regard, vanes 108 may reduce the weight and cost of a gas turbine engine.

The composite material of vanes 108 may be resistant to heat. In various embodiments, the properties of materials use to form vanes 108 are compatible with the temperatures and pressures encountered during operation of engine section 100. In various embodiments, a vane 108 including a carbon fiber reinforced epoxy resin may be resistant to temperatures experienced in the engine section 100.

Each vane 108 of vane assembly 104 may be circumferentially retained to the engine at an outer diameter and an inner diameter of the vane assembly 104. Vanes 108 may be cantilevered with an attachment point at radially inner end 124 of vanes 108. In that regard, vanes 108 may be fixed to an engine structure at radially inner end 124, while vanes 108 may not be fixedly coupled at radially outer end 122. Vane 108 may extend in a cantilever manner from radially inner end 124 such that the cantilever mounted vane 108 extends toward radially outward from engine central longitudinal axis A-A'.

In various embodiments, vane 108 may include a platform 130 disposed at a radially outer end 122 of vane 108. Platform 130 may include a forward axial flange 132 and an aft axial flange 134 extending from platform 130. Forward axial flange 132 may extend axially forward from platform 130. Aft axial flange 134 may extend axially aft from platform 130. Vane 108 may be configured to interface with an engine case structure 36 via forward axial flange 132 and aft axial flange 134, wherein engine case structure 36 is disposed radially outward or distal to vane 108. Axial flanges 132, 134 may be configured to couple within one or more slots defined within engine case structure 36. Engine case structure 36 provides the support for the vane 108 such that loads on vane 108 transfer to the engine case structure 36.

In various embodiments, vane 108 may include a radial flange 136 disposed at a radially inner end 124 of vane 108. Vane assembly 104 may further include an inner shroud 140. Vane 108 may be configured to interface with inner shroud 140 via radial flange 136. Radial flange 136 may be configured to fit into a slot defined within inner shroud 140. Vane assembly 104 may be configured to interface with rotor assembly 102 at inner shroud 140. For example, rotor assembly 102 may include a sealing structure 142, such as one or more knife edge seals, that engage with a radially inner surface 144 of inner shroud 140.

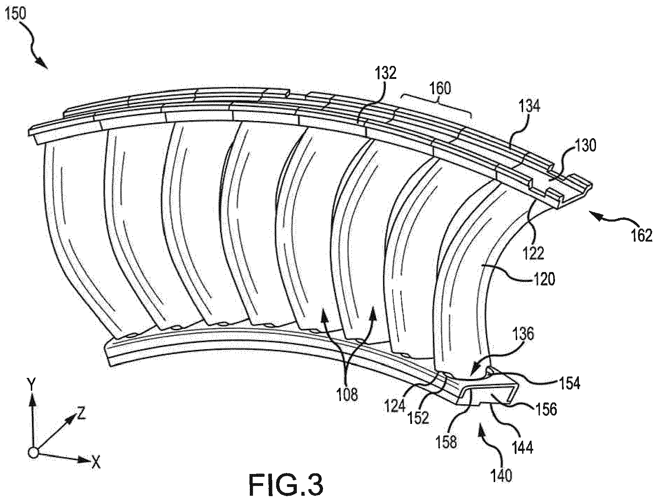

With reference now to FIGS. 2 and 3, a vane subassembly 150 of a vane assembly 104 is shown in accordance with various embodiments. A vane assembly 104 may include a partial or a complete circumferential array of vanes 108. In various embodiments, vane assembly 104 may comprise a continuous annular vane assembly or a plurality of vane clusters or vane subassemblies 150. Vanes 108 may be grouped into vane subassemblies 150 and arranged circumferential about engine central longitudinal axis A-A' (see FIG. 2) to provide the vane assembly 104. Vane subassemblies 150 may be mounted in circumferentially abutting relationship to form an annular ring.

Referring to FIG. 3, a vane subassembly 150 may include a plurality of vanes 108 and a segment of inner shroud 140. Inner shroud 140 defines a plurality of apertures 152 configured to receive vanes 108. A radial flange 136 at radially inner end 124 of vane 108 is configured to fit into an aperture 152 of inner shroud 140. A radial flange 136 of each vane 108 is received in a corresponding aperture 152 of the inner shroud 140.

In various embodiments, inner shroud 140 may be comprised of the same material or a similar material as vanes 108. Inner shroud 140 may be comprised of a composite material such as a fiber composite material and/or a fiber composite material infiltrated or impregnated with a resin, such as epoxy or other thermoset or a thermoplastic. The composite material of inner shroud 140 may comprise at least one of carbon fiber, glass fiber, aramid fiber, para-aramid fiber or a combination thereof impregnated with a resin. The composite material of inner shroud 140 may comprise a high temperature polymer such as an amorphous thermoplastic PEI, such as ULTEM^{®}, which is a trademark of SABIC Innovative Plastics, Inc. For example, inner shroud 140 may be formed from a non-metallic carbon fiber reinforced epoxy resin. In various embodiments, inner shroud 140 may be made from moldable materials, such as carbon and/or glass reinforced thermoset or thermoplastic. The material may be compression molded using an autoclave or injection molded by injecting material into a mold. The materials may be low cost, low weight materials shaped using low cost techniques. Accordingly, inner shroud 140 may reduce the weight and cost of a gas turbine engine.

In various embodiments, inner shroud 140 may be comprised of a metal, such as titanium, titanium-based alloy, aluminum, aluminum-based alloy or other alloy or metal. The material of inner shroud 140 may be resistant to heat. In various embodiments, the properties of materials use to form vanes 108 are compatible with the temperatures and pressures encountered during operation of engine section 100 (of FIG. 2). In various embodiments, inner shroud 140 including a carbon fiber reinforced epoxy resin may be resistant to temperatures experienced in the engine section 100.

Vanes 108 are attached to inner shroud 140 by a flexible material 154 disposed in aperture 152 between vane 108 and inner shroud 140. In various embodiments, flexible material 154 can be a rubber potting material, such as silicone rubber, or another elastomeric material. Flexible material 154 may be room temperature vulcanized (RTV) silicone or rubber or other thermoset material. Flexible material 154 can be applied within aperture 152 as a liquid and then allowed to cure or solidify. Flexible material 154 can hold vane 108 in a fixed position with respect to inner shroud 140 so as to be spaced from and avoid contact with inner shroud 140. Flexible material 154 adheres to and bonds vanes 108 to inner shroud 140 to provide a flexible connection between these components. Flexible material 154 supports and vibrationally isolates radial flange 136 of vane 108 relative to inner shroud 140.

An abradable material 156 may be formed on or otherwise bonded to an inner diameter surface 158 of inner shroud 140 opposite to vanes 108. In various embodiments, the abradable material 156 may comprise an elastomeric material, such as silicone or rubber, for example. Abradable material 156 may form the radially inner surface 144 of inner shroud 140 and may contact sealing structure 142 from FIG. 2 to form an abradable air seal.

Vanes 108 may be mounted in a circumferentially abutting relationship to form a vane subassembly 150, which may be portion of an annular vane assembly. In various embodiments, each vane 108 may be a separate component from each adjacent vane 108. Each vane 103 further includes an outer shroud segment 160 disposed at radially outer end 122 of each vane 108. Each vane 108 includes a platform 130, which may be coupled to the vane 108 or integrally formed with the vane 108. A radially outer end 122 of each vane 108 with platform 130 may form an outer shroud segment 160. A plurality of outer shroud segments 160 may form outer diameter shroud 162 of a vane subassembly 150 or vane assembly 104. Thus, each vane 108 may include a discrete outer shroud segment 160 integral with the vane 108. As used herein, the term "integrated" or "integral" may include forming one, single continuous piece. In various embodiments, outer shroud segment 160 may be formed integrally with vane 108 as one continuous composite material by injection molding.

In accordance with the present invention, outer shroud segment 160 is comprised of the same material as vanes 108. Outer shroud segment 160 is comprised of a composite material such as a fiber composite material and/or a fiber composite material infiltrated or impregnated with a resin, such as epoxy or other thermoset or a thermoplastic. The composite material of outer shroud segment 160 may comprise at least one of carbon fiber, glass fiber, aramid fiber, para-aramid fiber or a combination thereof impregnated with a resin. The composite material of outer shroud segment 160 may comprise a high temperature polymer such as an amorphous thermoplastic PEI, such as ULTEM^{®}, which is a trademark of SABIC Innovative Plastics, Inc. For example, outer shroud segment 160 may be formed from a non-metallic carbon fiber reinforced epoxy resin. In various embodiments, outer shroud segment 160 may be made from moldable materials, such as carbon and/or glass reinforced thermoset or thermoplastic. The material may be compression molded using an autoclave or injection molded by injecting material into a mold. The materials may be low cost, low weight materials shaped using low cost techniques. Accordingly, outer shroud segment 160 may reduce the weight and cost of a gas turbine engine. The composite material of outer shroud segment 160 may be resistant to heat. In various embodiments, the properties of materials use to form vanes 108 are compatible with the temperatures and pressures encountered during operation of engine section 100 (of FIG. 2).

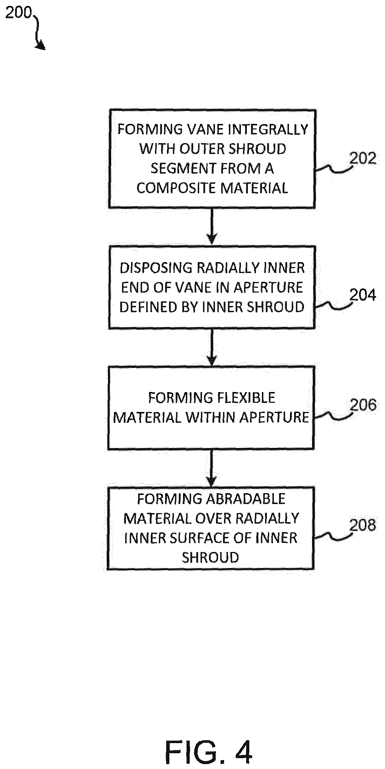

With reference to FIG. 4, a method 200 for manufacturing a vane assembly is shown in accordance with various embodiments. Method 200 may comprise the steps of forming a vane with integrally with an outer shroud segment from a composite material (step 202), disposing a radially inner end of the vane in an aperture defined by an inner shroud (step 204), forming a flexible material within the aperture (step 206), and forming an abradable material over a radially inner surface of the inner shroud (step 208).

Step 202 may further include forming the vane 108 integrally with the outer shroud segment 160 by injection molding or by compression molding the vane 108 and the outer shroud segment 160. The composite material may include at least one of carbon fiber, glass fiber, aramid fiber or para-aramid fiber impregnated with a resin. A plurality of outer shroud segments Step 204 may further comprise cantilever mounting the vane 108 to the inner shroud 140. Step 204 may further comprise mounting a plurality of vanes 108 within inner shroud 140 to form a vane subassembly 150. Step 206 may further comprise curing flexible material 154 to bond vanes 108 within aperture 152 of inner shroud 140.

Step 208 may further comprise forming abradable material 156 over inner diameter surface 158 of inner shroud 140 after forming flexible material 154 within aperture 152 of inner shroud 140. Method 200 may further comprise disposing one or more vane subassemblies 150 circumferentially to form the vane assembly 104.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A vane assembly (104), comprising:
a vane (108);
an outer shroud segment (160) disposed at a radially outer end (122) of the vane (108);
an inner shroud (140) defining an aperture (152), wherein a radially inner end (124) of the vane (108) is disposed within the aperture (152); and
**characterised by**:
a flexible material (154) disposed within the aperture (152) and between the vane (108) and the inner shroud (140); and by
the vane (108) comprising a composite material, wherein the outer shroud segment (160) comprises the same composite material as the vane (108).

2. The vane assembly (104) of claim 1, wherein the outer shroud segment (160) is integrally formed with the vane (108).

3. The vane assembly (104) of claim 1 or 2, wherein the composite material includes at least one of carbon fiber, glass fiber, aramid fiber or para-aramid fiber impregnated with a resin.

4. The vane assembly (104) of any preceding claim, wherein the vane (108) is cantilever mounted to the inner shroud (140).

5. The vane assembly (104) of any preceding claim, further comprising an abradable material (156) formed on an inner diameter surface (158) of the inner shroud (140).

6. The vane assembly (104) of any preceding claim, wherein the inner shroud (140) comprises at least one of a composite material or a metal.

7. A gas turbine engine (20), comprising an engine section comprising at least one of a compressor section (24) or a fan section (22), the engine section comprising the vane assembly (104) of any preceding claim.

8. The gas turbine engine (20) of claim 7, further comprising an engine case structure (36) disposed radially outward from the vane (108), wherein the vane (108) includes a forward axial flange (132) configured to couple within the engine case structure (36).

9. A method of manufacturing a vane assembly (104), comprising:
forming a vane (108) integrally with an outer shroud segment (160);
disposing a radially inner end (124) of the vane (108) in an aperture (152) defined by an inner shroud (140); and
**characterised by**
forming a flexible material (154) within the aperture (152); and
forming an abradable material (156) over a radially inner surface (158) of the inner shroud (140), wherein the vane (108) is formed from a composite material and
wherein the outer shroud segment (160) comprises the same composite material as the vane (108).

10. The method of manufacturing a vane assembly (104) of claim 9, further including cantilever mounting the vane (108) to the inner shroud (140).

11. The method of manufacturing a vane assembly (104) of claim 9 or 10, wherein the forming the vane (108) integrally with the outer shroud segment (160) includes injection molding the vane (108) and the outer shroud segment (160).

12. The method of manufacturing a vane assembly (104) of claim 9, 10 or 11, wherein the composite material includes at least one of carbon fiber, glass fiber, aramid fiber or para-aramid fiber impregnated with a resin.

## Patentansprüche

1. Schaufelbaugruppe (104) umfassend:
eine Schaufel (108);
ein äußeres Ummantelungssegment (160), das an einem radial äußeren Ende (122) der Schaufel (108) angeordnet ist;
eine innere Ummantelung (140), die eine Öffnung (152) definiert, wobei ein radial inneres Ende (124) der Schaufel (108) innerhalb der Öffnung (152) angeordnet ist; und
**gekennzeichnet durch**:
ein flexibles Material (154), das innerhalb der Öffnung (152) und zwischen der Schaufel (108) und der inneren Ummantelung (140) angeordnet ist; und **dadurch**,
dass die Schaufel (108) ein Verbundmaterial umfasst, wobei das äußere Ummantelungssegment (160) dasselbe Verbundmaterial wie die Schaufel (108) umfasst.

2. Schaufelbaugruppe (104) nach Anspruch 1, wobei das äußere Ummantelungssegment (160) einstückig mit der Schaufel (108) ausgebildet ist.

3. Schaufelbaugruppe (104) nach Anspruch 1 oder 2, wobei das Verbundmaterial mindestens eines von Kohlenstoffasern, Glasfasern, Aramidfasern oder Para-Aramidfasern beinhaltet, die mit einem Harz imprägniert sind.

4. Schaufelbaugruppe (104) nach einem der vorhergehenden Ansprüche, wobei die Schaufel (108) freitragend an der inneren Ummantelung (140) montiert ist.

5. Schaufelbaugruppe (104) nach einem der vorhergehenden Ansprüche, ferner umfassend ein abreibbares Material (156), das auf einer Innendurchmesserfläche (158) der inneren Ummantelung (140) ausgebildet ist.

6. Schaufelbaugruppe (104) nach einem der vorhergehenden Ansprüche, wobei die innere Ummantelung (140) mindestens eines von einem Verbundmaterial oder einem Metall umfasst.

7. Gasturbinentriebwerk (20) mit einem Triebwerksabschnitt, der wenigstens einen Verdichterabschnitt (24) oder einen Gebläseabschnitt (22) umfasst, wobei der Triebwerksabschnitt die Schaufelbaugruppe (104) nach einem der vorhergehenden Ansprüche umfasst.

8. Gasturbinentriebwerk (20) nach Anspruch 7, ferner umfassend eine Triebwerksgehäusestruktur (36), die radial außerhalb der Schaufel (108) angeordnet ist, wobei die Schaufel (108) einen vorderen axialen Flansch (132) beinhaltet, der dazu konfiguriert ist, in der Motorgehäusestruktur (36) gekoppelt zu werden.

9. Verfahren zum Herstellen einer Schaufelbaugruppe (104), umfassend:
Bilden einer Schaufel (108) integral mit einem äußeren Ummantelungssegment (160);
Anordnen eines radial inneren Endes (124) der Schaufel (108) in einer Öffnung (152), die durch eine innere Ummantelung (140) definiert ist; und
**gekennzeichnet durch**
Bilden eines flexiblen Materials (154) innerhalb der Öffnung (152); und
Bilden eines abreibbaren Materials (156) über einer radial inneren Fläche (158) der inneren Ummantelung (140), wobei die Schaufel (108) aus einem Verbundmaterial gebildet ist und wobei das äußere Ummantelungssegment (160) das gleiche Verbundmaterial umfasst wie die Schaufel (108).

10. Verfahren zum Herstellen einer Schaufelbaugruppe (104) nach Anspruch 9, das ferner freitragendes Montieren der Schaufel (108) an der inneren Ummantelung (140) beinhaltet.

11. Verfahren zum Herstellen einer Schaufelbaugruppe (104) nach Anspruch 9 oder 10, wobei das integrale Bilden der Schaufel (108) mit dem äußeren Ummantelungssegment (160) das Spritzgießen der Schaufel (108) und des äußeren Ummantelungssegments (160) beinhaltet.

12. Verfahren zum Herstellen einer Schaufelbaugruppe (104) nach Anspruch 9, 10 oder 11, wobei das Verbundmaterial mindestens eines von Kohlenstoffasern, Glasfasern, Aramidfasern oder Para-Aramidfasern beinhaltet, die mit einem Harz imprägniert sind.

## Revendications

1. Ensemble d'aube (104) comprenant :
une aube (108) ;
un segment d'enveloppe externe (160) disposé à une extrémité radialement externe (122) de l'aube (108) ;
une enveloppe interne (140) définissant une ouverture (152), dans laquelle une extrémité radialement interne (124) de l'aube (108) est disposée à l'intérieur de l'ouverture (152) ; et **caractérisé par** :
un matériau flexible (154) disposé à l'intérieur de l'ouverture (152) et entre l'aube (108) et l'enveloppe interne (140) ; et par
l'aube (108) comprenant un matériau composite, dans lequel le segment d'enveloppe externe (160) comprend le même matériau composite que l'aube (108).

2. Ensemble d'aube (104) selon la revendication 1, dans lequel le segment d'enveloppe externe (160) est formé d'un seul tenant avec l'aube (108).

3. Ensemble d'aube (104) selon la revendication 1 ou 2, dans lequel le matériau composite comporte au moins une fibre de carbone, une fibre de verre, une fibre d'aramide ou une fibre de para-aramide imprégnée d'une résine.

4. Ensemble d'aube (104) selon une quelconque revendication précédente, dans lequel l'aube (108) est montée en porte-à-faux sur l'enveloppe interne (140).

5. Ensemble d'aube (104) selon une quelconque revendication précédente, comprenant en outre un matériau abradable (156) formé sur une surface de diamètre interne (158) du carénage interne (140).

6. Ensemble d'aube (104) selon une quelconque revendication précédente, dans lequel l'enveloppe interne (140) comprend au moins l'un d'un matériau composite ou d'un métal.

7. Moteur à turbine à gaz (20), comprenant une section de moteur comprenant au moins une section de compresseur (24) ou une section de soufflante (22), la section de moteur comprenant l'ensemble d'aube (104) selon une quelconque revendication précédente.

8. Moteur à turbine à gaz (20) selon la revendication 7, comprenant en outre une structure de carter de moteur (36) disposée radialement vers l'extérieur de l'aube (108), dans lequel l'aube (108) comporte une bride axiale avant (132) configurée pour se coupler à l'intérieur de la structure de carter de moteur (36).

9. Procédé de fabrication d'un ensemble d'aube (104), comprenant :
la formation d'une aube (108) d'un seul tenant avec un segment d'enveloppe externe (160) ;
la disposition d'une extrémité radialement interne (124) de l'aube (108) dans une ouverture (152) définie par une enveloppe interne (140) ; et
**caractérisé par**
la formation d'un matériau flexible (154) à l'intérieur de l'ouverture (152) ; et
la formation d'un matériau abradable (156) sur une surface radialement interne (158) de l'enveloppe interne (140), dans lequel l'aube (108) est formée d'un matériau composite et dans lequel le segment d'enveloppe externe (160) comprend le même matériau composite que l'aube (108).

10. Procédé de fabrication d'un ensemble d'aube (104) selon la revendication 9, comportant en outre le montage en porte-à-faux de l'aube (108) sur l'enveloppe interne (140).

11. Procédé de fabrication d'un ensemble d'aube (104) selon la revendication 9 ou 10, dans lequel la formation de l'aube (108) d'un seul tenant avec le segment d'enveloppe externe (160) comporte le moulage par injection de l'aube (108) et le segment d'enveloppe externe (160).

12. Procédé de fabrication d'un ensemble d'aube (104) selon la revendication 9, 10 ou 11, dans lequel le matériau composite comporte au moins une fibre de carbone, une fibre de verre, une fibre d'aramide ou une fibre de para-aramide imprégnée d'une résine.
